# EUROPÄISCHE PATENTSCHRIFT

(11) **EP 0 371 194 B1**
(45) Veröffentlichungstag und Bekanntmachung des Hinweises auf die Patenterteilung: **10.03.1993**
(21) Anmeldenummer: 89112453.9
(22) Anmeldetag: 07.07.1989
(51) Int. Cl.: F16F 1/38

(54) **Hülsengummifeder**
Bushing-type rubber spring
Ressort du type à manchon en caoutchouc

(30) Priorität: 29.11.1988 DE 3840176
(43) Veröffentlichungstag der Anmeldung: 06.06.1990
(73) Patentinhaber: Firma Carl Freudenberg, 69469 Weinheim (DE)
(72) Erfinder: Schwerdt, Hans-Werner, D-6947 Laudenbach (DE)

(56) Entgegenhaltungen:
- EP-A- 0 009 120
- EP-A- 0 199 240
- EP-A- 0 300 093
- DE-A- 3 635 612
- FR-A- 2 378 986
- GB-A- 2 010 438

## Beschreibung

Die Erfindung betrifft eine Hülsengummifeder nach dem Oberbegriff von Anspruch 1.

Eine solche Hülsengummifeder ist aus der FR-A-2 378 986 bekannt. Das Innenteil und das Außenteil werden dabei durch zwei unnachgiebige Rohre gebildet, die einander umschließen. Die Rohre sind durch einen in den Zwischenraum einvulkanisierten Federkörper aus gummielastischem Werkstoff verbunden, wobei die Festlegung des Federkörpers an den Rohren durch eine Hitzevulkanisierung des ihn bildenden Werkstoffes erfolgt. Im Fertigungszustand ist das von dem Federkörper umschlossene Innenteil dem Außenteil exzentrisch achsparallel zugeordnet. Der in radialer Richtung am kürzesten ausgebildete Verbindungssteg weist entlang seiner axialen Erstreckung eine Durchtrennung auf, wobei der dadurch gebildete Spalt durch eine Kappe ausgefüllt ist, die auf dem Verbindungssteg befestigt ist und dadurch das Innenteil in Richtung der Achse des Außenteiles bewegt. Durch diese Ausgestaltung entsteht eine Vorspannung der Hülsengummifeder. Im belasteten Zustand wird die Hülsengummifeder weiter vorgespannt, bis das Innenteil dem Außenteil konzentrisch zugeordnet ist. Bei einer konzentrischen Zuordnung von Innen- und von Außenteil zueinander begrenzen das Außenteil und die Kappe einen Radialspalt. Bei Extremauslenkungen von Innen- und Außenteil zueinander dient die Kappe beim Anschlagen an das Außenteil als Dämpfungselement mit progressiver Dämpfungscharakteristik. Dabei ist allerdings zu beachten, daß die Hitzevulkanisierung Schrumpfspannungen des den Federkörper bildenden Werkstoffes im Zuge der an die Hitzevulkanisierung anschließenden Abkühlung zur Folge hat, wodurch die Gebrauchsdauer merklich verkürzt ist. Insbesondere auf den in einer Radialebenen angeordneten Verbindungsstegen, die einander gegenüberliegend angeordnet sind, treten bei Verlagerung des Innenteiles von einer exzentrischen, im wesentlichen spannungsfreien Ausgangsposition, in die konzentrische Montageposition gebrauchsdauerverringernde Zuspannungen im Bereich der Begrenzungswandung auf, die den sich vergrößernden ersten Hohlraum begrenzt. Die Gebrauchseigenschaften während einer langen Gebrauchsdauer sind dadurch wenig befriedigend.

Der Erfindung liegt die Aufgabe zugrunde, eine Hülsengummifeder der eingangs genannten Art derart weiterzuentwickeln, daß sich eine deutlich verbesserte Gebrauchsdauer ergibt neben der Möglichkeit, die elastische Nachgiebigkeit nachträglich an bestimmte Erfordernisse des Anwendungsfalles anzupassen. Die Hülsengummifeder soll einfach herstellbar sein.

Dieser Aufgabe wird erfindungsgemäß bei einer Hülsengummifeder der eingangs genannten Art durch die kennzeichnenden Merkmale von Anspruch 1 gelöst. Auf vorteilhafte Ausgestaltungen nehmen die Unteransprüche Bezug.

Bei der erfindungsgemäßen Hülsengummifeder sind die Verbindungsstege so verteilt, daß sich darin beim Einfügen des Zusatzkörpers jeweils eine Stauchspannung ergibt. Die solcher Art erzeugte Vorspannung ist nicht nur in dem einen Steg vorhanden, sondern sie verteilt sich gleichmäßig zugleich auch auf die anderen Stege. Sämtliche Stege sind dadurch zwischen dem Innen- und dem Außenteil zumindest frei von inneren Zugspannungen. Eine unbeabsichtigte Ablösung von dem Innen- und dem Außenteil ist dadurch nicht mehr zu befürchten.

Desweiteren besteht die Möglichkeit, durch eine gegenseitige maßliche Abstimmung zwischen der Breite des Zusatzkörpers und der herstellungsbedingten Breite der Durchtrennung die für den Anwendungsfall erforderliche Druckvorspannung in den Verbindungsstegen quantitativ in bestimmter Weise festzulegen.

Diese Festlegung kann im Anschluß an die Hitzevulkanisierung und noch während der bestimmungsgemäßen Verwendung der ansonsten fertiggestellten Hülsengummifeder erfolgen. Es besteht dadurch die Möglichkeit, standardisierte Hülsengummifedern einer bestimmten Ausführungsart in Verbindung mit Zusatzkörpern einer unterschiedlichen Gestaltung zu verwenden in Bezug auf die federnde Lagerung von Lasten eines unterschiedlichen Gewichtes, beispielsweise von Verbrennungsmotoren einer voneinander abweichenden Leistungsklasse und/oder Ausstattung.

Um sicherzustellen, daß in der gebrauchsfertigen Hülsengummifeder Zugvorspannungen an keiner einzigen Stelle des Federkörpers aus gummielastischem Werkstoff vorhanden sind, hat es sich als vorteilhaft bewährt, wenn der Teilbereich, in dem die Durchtrennung angeordnet ist, die gesamte Länge des Verbindungssteges umfaßt. Zusätzlich hat es sich als zweckmäßig erwiesen, wenn der Zusatzkörper von einer an die Form der Verbindungsstege im Bereich der Durchtrennung angepaßten Gestalt ist. Die durch das Einfügen des Zusatzkörpers in den beiderseits an die Durchtrennung angrenzenden Bereichen erzeugten Druckvorspannungen sind hierdurch in allen Teilbereichen von einer übereinstimmenden Größe.

Um eine richtungsneutrale Relativbeweglichkeit des Innenteiles in dem Außenteil zu ermöglichen, hat es sich als vorteilhaft bewährt, wenn die Durchtrennung in zwei einander im wesentlichen gegenüberliegenden Verbindungsstegen vorgesehen ist und wenn die Verbindungsstege und die Durchtrennung in bezug auf das Außen- und das Innenteil spiegelbildlich gestaltet sind. Die sich nach der Hitzevulkanisierung des Federkörpers ergebende, gegenseitige Zuordnung zwischen dem Innenteil und dem Außenteil bleibt bei einer solchen Ausführung auch im Anschluß an das Einfügen der Zusatzkörper erhalten.

In Anwendungsfällen, in denen statische Vorlasten unsymmetrisch aufzunehmen sind, hat es sich als vorteilhaft bewährt, wenn die in die beiden Durchtrennungen eingefügten Zusatzkörper und/oder die Durchtrennungen eine voneinander abweichende Dicke haben. Hierdurch läßt sich nach dem Einfügen der Zusatzkörper eine gerichtete Vorspannung in den Verbindungsstegen erzeugen, die so bemessen ist, daß sich nach dem Aufbringen der statischen Vorlast eine symmetrische Zuordnung des Innenteiles zu dem Außenteil ergibt. Die Relativbeweglichkeit der beiden Teile zueinander ist dementsprechend wiederum in jeder Richtung ausgeglichen.

Bei reduzierten Werkzeugkosten läßt sich der Zusatzkörper besonders einfach einfügen, wenn die Durchtrennung entweder dem Innenteil oder dem Außenteil unmittelbar benachbart ist. Im allgemeinen wird dieser Variante der Vorzug gegeben.

Um einen unveränderlichen Sitz des eingefügten Zusatzkörpers in der Durchtrennung zu gewährleisten, hat es sich als vorteilhaft bewährt, wenn der Zusatzkörper mit wenigstens einem die Durchtrennung überragenden Vorsprung versehen ist und wenn der Vorsprung in einer Richtung, die sich quer zur Durchtrennung erstreckt eine größere Breite hat als die Durchtrennung und den Verbindungssteg berührt. Zweckmäßig sind entsprechend gestaltete Vorsprünge auf zwei einander gegenüberliegenden Seiten der Durchtrennung an dem Zusatzkörper vorgesehen. Eine adhäsive Festlegung des Zusatzkörpers in der Durchtrennung ist selbstverständlich ebenfalls möglich.

Der Zusatzkörper kann aus einem elastomeren Werkstoff bestehen, der eine größere Härte aufweist als der den Federkörper bildende, elastomere Werkstoff. Im allgemeinen gelangen Ausführungen zur Anwendung, die im Vergleich zur Nachgiebigkeit der Verbindungsstege unnachgiebig ausgebildet und vorzugsweise aus Metall oder Hartkunststoff bestehen.

Der Gegenstand der Erfindung wird nachfolgend anhand der in der Anlage beigefügten Zeichnungen weiter verdeutlicht. Es zeigen:
Figuren 1
Eine Ausführung von Hülsengummifedern in der Form, die sich nach der Hitzevulkanisierung des Federkörpers ergibt sowie in der Form, die sich nach dem Einfügen der Zusatzkörper in die Durchtrennungen ergibt.
Figur 2
Ein beispielhaftes Kraftwegdiagramm einer Hülsengummifeder der erfindungsgemäßen Art.

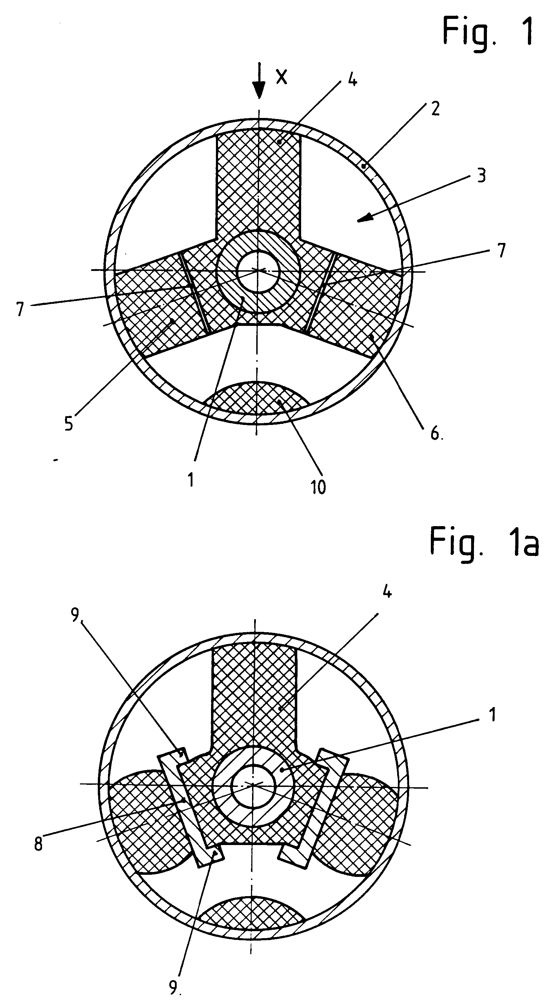

Die in der Figur 1 gezeigte Hülsengummifeder ist spiegelbildlich gestaltet. Sie umfasst jeweils ein Innenteil 1, ein dieses in einem radialen Abstand umschließendes Außenteil 2 und einen in dem durch den Abstand gebildeten Spalt angeordneten, mit dem Innenteil 1 und dem Außenteil 2 haftend verbundenen Federkörper 3 aus elastomerem Werkstoff, wobei der Federkörper 3 mindestens drei Verbindungsstege 4,5,6,11 zwischen dem Innenteil 1 und dem Außenteil 2 umfaßt. Bei der Ausführung nach Figur 1 sind die beiden einander im wesentlichen gegenüberliegenden Verbindungsstege 5,6 jeweils von einer Durchtrennung 7 ganz durchschnitten, welche zwischen dem Innenteil 1 und dem Außenteil 2 angeordnet ist und sich in Längsrichtung der Hülsengummifeder erstreckt. Die Verbindungsstege 5,6 und die Durchtrennungen 7 sind spiegelbildlich gestaltet und der einander zugeordnet. Das Innenteil 1 und das Außenteil 2 sind von rohrförmiger Gestalt und bestehen aus Metall. Sie haben nach der Hitzevulkanisierung des Federkörpers 3 eine gemeinsame Achse. Im unteren Teil der Darstellung ist das Außenteil 2 mit einem Anschlagpuffer 10 versehen. Dieser durchzieht die Hülsengummifeder auf ihrer ganzen Länge.

In Figur 1a ist die Hülsengummifeder nach Figur 1 nach dem Einfügen der Zusatzkörper 8 gezeigt. Diese sind spiegelbildlich gestaltet und angeordnet. Sie haben eine Dicke, die größer ist als die herstellungsbedingte Weite der Durchtrennungen 7 der Verbindungsstege 5,6. Dadurch ergibt sich nach dem Einfügen der Zusatzkörper 8 eine radiale Stauchung der Teilstege 5,6, welche die zeichnerisch angedeutete Querschnittsvergrößerung zur Folge hat. Auch der Verbindungssteg 4 erfährt eine gewisse Stauchung in radialer Richtung. Sie hat eine Relativverlagerung des Innenteils 1 im Außenteil 2 in senkrechter Richtung nach oben zur Folge, welche dazu dienen kann, die Verformung zu kompensieren, welche sich nach dem Aufbringen der bestimmungsgemäß zu tragenden statischen Last ergibt. Die Relativbeweglichkeit des Innenteiles 1 in dem Außenteil 2 ist anschließend in jeder Richtung ausgeglichen, wie in Figur 1a angedeutet.

Die Zusatzkörper 8 sind mit Vorsprüngen 9 versehen, welche die Seitenflanken der Verbindungsstege in den Bereichen der beiderseitiger Durchtrennung anliegend berühren. Eine Relativverlagerung der Zusatzkörper ist hierdurch während der bestimmungsgemäßen Verwendung der Hülsengummifeder weitestgehend ausgeschlossen.

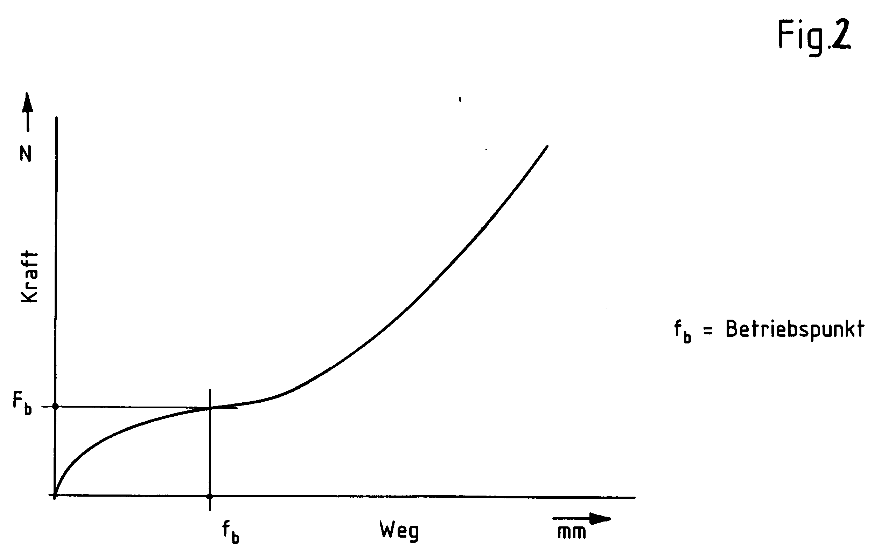

Wie in Figur 2 gezeigt, ist es möglich, mit einer Hülsengummifeder der erfindungsgemäßen Art eine besonders große statische Vorlast aufzunehmen. Dennoch ergibt sich im Betriebspunkt eine wesentlich niedrigere Federsteifigkeit als bei den bekannten Ausführungen. Hinsichtlich der Isolierung von akustisch wirksamen, hochfrequenten Schwingungen ist das von großem Vorteil.

## Patentansprüche

1. Hülsengummifeder bestehend aus einem Innenteil (1), einem dieses in einem radialen Abstand umschließenden Außenteil (2) und einem in dem durch den Abstand gebildeten Spalt angeordeten, mit dem Innenteil (1) und dem Außenteil (2) haftend verbundenen Federkörper (3) aus elastomeren Werkstoff, wobei der Federkörper (3) mindestens drei in Umfangsrichtung verteilte Verbindungsstege (4,5,6) zwischen dem Innenteil (1) und dem Außenteil (2) umfaßt, wobei mindestens einer der Verbindungsstege (4,5,6) in mindestens einem Teilbereich seiner Längserstreckung zwischen dem Innenteil (1) und dem Außenteil (2) von einer Durchtrennung (7) ganz durchschnitten ist, wobei sich die Durchtrennung (7) im wesentlichen parallel zur Längsrichtung des Innen- und des Außenteiles (1,2) erstreckt und wobei mindestens ein Zusatzkörper (8) vorgesehen ist, der unter Erzeugung einer elastischen Vorspannung in den beiderseits an die Durchtrennung (7) angrenzenden Bestandteilen des jeweiligen Verbindungssteges (4,5,6) in die Durchtrennung eingefügt ist, dadurch gekennzeichnet, daß die Verbindungsstege (4,5,6) (4,5,6) so verteilt sind, daß sich nach dem Einfügen des Zusatzkörpers (8) jeweils eine Stauchspannung ergibt, so daß säntliche Stege zwischen dem Innenteil (1) und dem Außenteil (2) zumindest frei von inneren Zugspannungen sind.

2. Hülsengummifeder nach Anspruch 1, dadurch gekennzeichnet, daß der Teilbereich, in dem die Durchtrennung (7) angeordnet ist, die gesamte Länge des Verbindungssteges (4,5,6,11) umfaßt.

3. Hülsengummifeder nach Anspruch 2, dadurch gekennzeichnet, daß der Zusatzkörper (3) von einer an die Form der Verbindungsstege (4,5,6,11) im Bereich der Durchtrennung (7) angepaßten Gestalt ist.

4. Hülsengummifeder nach Anspruch 1 bis 3, dadurch gekennzeichnet, daß die Durchtrennung (7) in zwei einander im wesentlichen gegenüberliegenden Verbindungsstegen (5,6) vorgesehen ist und daß die Verbindungsstege (5,6) und die Durchtrennung (7) in bezug auf das Außen- und Innenteil (2,1) spiegelbildlich gestaltet sind.

5. Hülsengummifeder nach Anspruch 4, dadurch gekennzeichnet, daß die in die beiden Durchtrennungen (7) eingefügten Zusatzkörper (8) eine voneinander abweichende Dicke haben.

6. Hülsengummifeder nach Anspruch 1 bis 5, dadurch gekennzeichnet, daß der Zusatzkörper (8) mit wenigstens einem aus der Durchtrennung (7) herausragenden Vorsprung (9) versehen ist und daß der Vorsprung (9) in einer Richtung, die sich quer zu der Durchtrennung (7) erstreckt, eine größere Breite hat als der Zusatzkörper (8) und den Verbindungssteg berührt.

7. Hülsengummifeder nach Anspruch 6, dadurch gekennzeichnet, daß der Vorsprung (9) auf zwei einander gegenüberliegenden Seiten der Durchtrennung (7) an dem Zusatzkörper (8) vorgesehen ist.

8. Hülsengummifeder nach Anspruch 1 bis 7, dadurch gekennzeichnet, daß der Zusatzkörper (8) aus Metall oder Hartkunststoff besteht.

## Claims

1. A bushing-type rubber spring, composed of an inner part (1), an outer part (2) which surrounds said inner part with radial spacing, and a spring body (3) which is arranged in the gap formed by the spacing, is connected adhesively to the inner part (1) and the outer part (2), and is made of elastomer material, the spring body (3) comprising at least three connecting webs (4, 5, 6) distributed in the circumferential direction between the inner part (1) and the outer part (2), at least one of the connecting webs (4, 5, 6) being completely severed by a separation (7) in at least one partial region of its longitudinal extension between the inner part (1) and the outer part (2), the separation (7) extending substantially parallel to the longitudinal direction of the inner and of the outer part (1, 2), and at least one additional body (8) being provided which is inserted in the separation producing an elastic prestress in the constituents of the respective connecting web (4, 5, 6) adjoining the separation (7) on both sides, characterised in that the connecting webs (4, 5, 6) are distributed in such a way that a compression stress results in each case after the insertion of the additional body (8), such that all the webs are at least free from inner tensile stresses between the inner part (1) and the outer part (2).

2. A bushing-type rubber spring as claimed in claim 1, characterised in that the partial region in which the separation (7) is arranged covers the entire length of the connecting web (4, 5, 6, 11).

3. A bushing-type rubber spring as claimed in claim 2, characterised in that the additional body (3) is of a design adapted to the shape of the connecting webs (4, 5, 6, 11) in the region of the separation (7).

4. A bushing-type rubber spring as claimed in any of claims 1 to 3, characterised in that the separation (7) is provided in two connecting webs (5, 6) located substantially opposite one another, and in that the connecting webs (5, 6) and the separation (7) are designed in mirror image in respect of the outer and inner parts (2, 1).

5. A bushing-type rubber spring as claimed in claim 4, characterised in that the additional bodies (8) inserted in the two separations (7) have a mutually differing thickness.

6. A bushing-type rubber spring as claimed in any of claims 1 to 5, characterised in that the additional body (8) is provided with at least one projection (9) projecting from the separation (7), and in that the projection (9) has a greater width than the additional body (8) in a direction extending transversely to the separation (7) and touches the connecting web.

7. A bushing-type rubber spring as claimed in claim 6, characterised in that the projection (9) is provided on the additional body (8) on two opposite sides of the separation (7).

8. A bushing-type rubber spring as claimed in any of claims 1 to 7, characterised in that the additional body (8) is composed of metal or rigid plastic.

## Revendications

1. Ressort en caoutchouc à manchons se composant d'une partie intérieure (1), d'une partie extérieure (2) entourant cette partie avec un espacement radial ainsi qu'un corps élastique (3), disposé dans l'intervalle formé par l'espacement, constitué d'un matériau élastomère et relié de façon adhérente à la partie intérieure (1) et à la partie extérieure (2), ce corps élastique (3) comportant au moins trois nervures de liaison (4, 5, 6) réparties dans une direction circonférentielle entre la partie intérieure 1 et la partie extérieure 2, au moins une des nervures de liaison (4, 5, 6) étant divisée complètement par un intervalle séparateur (7) dans au moins une zone partielle de son étendue longitudinale entre la partie intérieure (1) et la partie extérieure (2), l'intervalle de séparation (7) étant orienté sensiblement parallèlement à la direction longitudinale de la partie intérieure (1) et de la partie extérieure (2), et il est prévu au moins un corps d'addition (8), qui est engagé dans l'intervalle de séparation en produisant une précontrainte élastique dans les zones, adjacentes des deux côtés à l'intervalle de séparation (7), de la nervure de liaison correspondante (4, 5, 6), caractérisé en ce que les nervures de liaison (4, 5, 6) sont réparties de telle sorte que, après l'insertion du corps d'addition (8), il se produise respectivement une contrainte de refoulement de telle sorte que toutes les nervures soient au moins exemptes de contraintes internes de traction entre la partie intérieure (1) et la partie extérieure (2).

2. Ressort en caoutchouc à manchons selon la revendication 1, caractérisé en ce que la zone partielle dans laquelle est disposé l'intervalle séparateur (7) s'étend sur toute la longueur de la nervure de liaison (4, 5, 6, 11).

3. Ressort en caoutchouc à manchons selon la revendication 2, caractérisé en ce que le corps d'addition (3) a un profil adapté à la forme des nervures de liaison (4, 5, 6, 11) dans la zone de l'intervalle séparateur (7).

4. Ressort en caoutchouc à manchons selon les revendications 1 à 3, caractérisé en ce que l'intervalle séparateur (7) est prévu dans deux nervures de liaison (5, 6) placées dans des positions sensiblement mutuellement opposées et en ce que les nervures de liaison (5, 6) et l'intervalle séparateur (7) sont profilés symétriquement par rapport à la partie extérieure (2) et à la partie intérieure (1).

5. Ressort en caoutchouc à manchons selon la revendication 4, caractérisé en ce que les corps d'addition (8) insérés dans les deux intervalles séparateurs (7) ont des épaisseurs différentes l'une de l'autre.

6. Ressort en caoutchouc à manchons selon les revendications 1 à 5, caractérisé en ce que le corps d'addition (8) est pourvu d'au moins une saillie (9) dépassant de l'intervalle séparateur (7) et en ce que la saillie (9) a, dans une direction orientée transversalement à l'intervalle séparateur (7), une plus grande largeur que le corps d'addition (8) et est en contact avec la nervure de liaison.

7. Ressort selon la revendication 6, caractérisé en ce que la saillie (9) est prévue sur deux côtés mutuellement opposés de l'intervalle séparateur (7) sur le corps d'addition (8).

8. Ressort selon les revendications 1 à 7, caractérisé en ce que le corps d'addition (8) se compose d'un métal ou d'une matière plastique dure.
